# EUROPÄISCHE PATENTSCHRIFT

(11) **EP 2 951 463 B1**
(45) Veröffentlichungstag und Bekanntmachung des Hinweises auf die Patenterteilung: **07.03.2018**
(21) Anmeldenummer: 14700266.1
(22) Anmeldetag: 09.01.2014
(51) Int. Cl.: F16D 13/58, F16F 15/14, F16D 13/40

(54) **BAUEINHEIT FÜR EINEN ANTRIEBSSTRANG EINES KRAFTFAHRZEUGS**
STRUCTURAL UNIT FOR A DRIVE TRAIN OF A MOTOR VEHICLE
UNITÉ MODULAIRE POUR CHAÎNE CINÉMATIQUE D'UN VÉHICULE AUTOMOBILE

(30) Priorität: 01.02.2013 DE 102013201666
(43) Veröffentlichungstag der Anmeldung: 09.12.2015
(73) Patentinhaber: ZF Friedrichshafen AG, 88046 Friedrichshafen (DE)
(72) Erfinder: DEPPERT, Reinhard, 97469 Gochsheim (DE); LUDSTECK, Sven, 97702 Münnerstadt (DE); BARTHA, Alexander, 97082 Würzburg (DE)
(86) Internationale Anmeldenummer: PCT/EP2014/050289
(87) Internationale Veröffentlichungsnummer: WO 2014/117979

(56) Entgegenhaltungen:
- DE-A1- 3 702 842
- DE-A1- 19 911 560
- DE-A1- 19 911 561
- DE-A1- 19 954 274
- US-A1- 2001 032 769

## Beschreibung

Vorliegende Erfindung betrifft eine Baueinheit für einen Antriebsstrang eines Kraftfahrzeugs mit zumindest einer Kupplungsanordnung, die dazu ausgelegt ist, eine Verbrennungsmaschine vom Antriebsstrangs zu entkoppeln, und einer drehzahladaptiven Schwingungstilgervorrichtung, insbesondere einem Fliehkrafttilger, zur Reduzierung von Schwingungen im Antriebsstrang mit mindestens einer entlang einer Auslenkbahn auslenkbaren Tilgermasse, wobei weiterhin eine Einschränkungsvorrichtung vorgesehen ist, die dazu ausgelegt ist, eine derartige Kraft auf die mindestens eine Tilgermasse auszuüben, dass die Tilgermasse in ihrer Bewegung zumindest eingeschränkt ist, sowie eine Hybridantriebsstranganordnung.

Drehzahladaptive Schwingungstilger, insbesondere Fliehkrafttilger, werden eingesetzt, um Ungleichförmigkeiten im Antriebsstrang zu reduzieren. Dabei kann es bei niedrigen Drehzahlen, beispielsweise beim Motorstart und -Stopp zu störenden Geräuschen kommen, weil die Tilgermassen nicht mehr von der Fliehkraft gehalten werden und aufgrund der Schwerkraft an den Begrenzungen der Tilgerbahn anschlagen.

Es ist deshalb beispielsweise im gattungsbildenden Stand der Technik gemäß der DE 199 54 274 oder auch der DE 10 2009 051 724 vorgeschlagen worden, die Bewegung der Tilgermasse bei niedrigen Drehzahlen einzuschränken bzw. die Tilgermasse mit einer die Tilgermasse festklemmenden Kraft zu beaufschlagen. Dabei sind die Einschränkungsvorrichtungen derart ausgebildet, dass sie automatisch bei einer Reduzierung der Drehzahl und damit einer Reduzierung der Fliehkraft die Tilgermasse festlegen. Nachteilig an diesem Stand der Technik ist jedoch, dass diese drehzahlabhängigen Einschränkungsvorrichtungen nur bei extrem niedrigen Drehzahlen die Tilgermasse zuverlässig festlegen. Wird der drehzahladaptive Schwingungstilger, beispielsweise im Zusammenhang mit einer elektrischen Maschine verwendet, die eher niedrige Drehzahlen aufweist, so kann es trotz der automatischen Einklemmvorrichtung zu Klappergeräuschen führen, da die drehzahlabhängige Bewegungseinschränkung der Tilgermassen erst bei extrem niedrigen Drehzahlen zum Tragen kommt.

Im Weiteren offenbart die DE 3702 842 A1 eine Baueinheit für einen Antriebsstrang eines Kraftfahrzeugs mit einer Reibungskupplungsanordnung, durch welche eine Verbrennungsmaschine vom Antriebsstrang entkoppelt werden kann und wobei eine Gegenreibfläche der Kupplungsscheibe durch ein erstes, fest mir der Kurbelwelle der Verbrennungsmaschine verbundenes Schwungrad gebildet wird. Auf der Kurbelwelle ist mittels eines Wälzlagers ein zweites Schwungrad drehbar gelagert. Mit der Kupplungsscheibe der Reibungskupplung ist über deren Kupplungsnabe eine Reibscheibe bzw. eine Reibdämpfungseinrichtung gekoppelt, welche axial in Richtung des zweiten Schwungrades verlagerbar ist und welche beim Schließen der Reibungskupplung mitbewegt wird, um mittels einer Anpresskraft in Reibanlage zu dem zweiten Schwungrad zu gelangen und um dieses dadurch an den drehenden Antriebsstrang anzukoppeln, wodurch die wirksame Schwungmasse der Baueinheit in diesem Betriebszustand erhöht werden kann. Bei geöffneter Reibungskupplung ist das zweite Schwungrad dagegen frei drehbar, kinematisch vom Antriebsstrang entkoppelt und kann keine Bewegung mit dem Antriebsstrang ausführen, um dessen Schwingungsverhalten zu beeinflussen.

Die US 2001/0032769 A1 beschreibt_eine Baueinheit für einen Antriebsstrang eines Kraftfahrzeugs mit einem Zweimassenschwungrad und einer daran angeschlossenen Reibungskupplung, welche eine Verbrennungsmaschine vom Antriebsstrang entkoppeln kann. Dabei ist die Kupplungsscheibe in üblicher Weise mittels einer Kupplungsnabe axial verlagerbar auf einer Getriebeeingangswelle gelagert. Der Kupplungsscheibe ist ein dynamischer Dämpfer bzw. Drehschwingungstilger zugeordnet, welcher eine scheibenförmige Trägheitsmasse umfasst, die über mehrere Schraubenfedern mit der Kupplungsscheibe verbunden ist. Der Drehschwingungstilger ist permanent mit einem als Rutschkupplung ausgebildeten Drehmomentbegrenzer in Reihe geschaltet. Aufgabe vorliegender Erfindung ist es deshalb, einen drehzahladaptiven Schwingungstilger bereitzustellen, der ein zuverlässiges Einschränken der Bewegung der Tilgermassen ermöglicht.

Diese Aufgabe wird durch eine Baueinheit gemäß Patentanspruch 1 sowie einen Hybridantriebsstrang gemäß Patentanspruch 17 gelöst.

Erfindungsgemäß wird eine Baueinheit für einen Antriebsstrang eines Kraftfahrzeugs vorgeschlagen mit zumindest einer Kupplungsanordnung, die dazu ausgelegt ist, eine Verbrennungsmaschine vom Antriebsstrang zu entkoppeln. Weiterhin umfasst die Baueinheit eine drehzahladaptive Schwingungstilgervorrichtung, insbesondere einen Fliehkrafttilger, zur Reduzierung von Schwingungen im Antriebsstrang mit mindestens einer entlang einer Auslenkbahn auslenkbaren Tilgermasse, wobei weiterhin eine Einschränkungsvorrichtung vorgesehen ist, die dazu ausgelegt ist, eine derartige Kraft auf die mindestens eine Tilgermasse auszuüben, dass die Tilgermasse in ihrer Bewegung zumindest eingeschränkt ist. Die Schwingungstilgervorrichtung weist weiterhin einen Tilgermassenträger auf, an dem die Tilgermasse pendelnd gelagert ist.

Dabei basiert die Erfindung auf der Idee, zum Einschränken der Bewegung der mindestens einen Tilgermasse die Einschränkungsvorrichtung derart auszubilden, dass sie mittels mindestens eines Elements der Kupplungsanordnung betätigbar ist. Das bedeutet, dass die Tilgermasse nicht wie aus dem Stand der Technik bekannt, abhängig von einer Drehzahl mit einer bewegungseinschränkenden Kraft beaufschlagt wird, sondern auf die Tilgermasse aktiv mittels eines Elements der Kupplungsvorrichtung eingewirkt wird.

Da insbesondere bei Hybridantrieben eine Trennkupplung vorgesehen ist, die die Verbrennungsmaschine vom Antriebsstrang koppelt und dafür sorgt, dass nur die elektrische Maschine ein Drehmoment auf den Antriebsstrang überträgt, bewirkt die erfindungsgemäße Baueinheit, dass bei rein elektrischen Betriebszuständen, die eine geringe Drehzahl aufweisen, die Tilgermassen aktiv und mehr oder weniger simultan mit der Kupplung
betätigt und mit Kraft beaufschlagt werden. Dadurch kann erreicht werden, dass auch bei niedrigen Drehzahlen die Tilgermasse zuverlässiger in ihrer Bewegung einschränkt ist, so dass ein Klappern vermieden wird.
Gemäß einem weiteren vorteilhaften Ausführungsbeispiel ist dabei die Einschränkungsvorrichtung weiterhin dazu ausgelegt, die Tilgermasse mit einer im Wesentlichen axialen Kraft zu beaufschlagen. Da insbesondere bei der Verwendung in Hybridantrieben der radiale Bauraum sehr eingeschränkt ist, wird nicht zusätzlich radialer Bauraum durch die Einschränkungsvorrichtung beansprucht. Zudem wirkt die Kupplungsanordnung im Wesentlichen axial, so dass die axiale Bewegung der Kupplungselemente dazu verwendet werden kann, eine axiale Kraft auf die Tilgermassen auszuüben.

Gemäß einem weiteren vorteilhaften Ausführungsbeispiel weist die Einschränkungsvorrichtung mindestens ein Wirkelement auf, das dazu ausgelegt ist, einschränkend auf die Tilgermassen einzuwirken, wobei vorzugsweise das mindestens eine Wirkelement axial elastisch ausgebildet ist. Prinzipiell ist eine Vielzahl von Bewegungseinschränkungsvorrichtungen vorstellbar. Die Verwendung eines vorzugsweise axial elastischen Wirkelements, hat jedoch den Vorteil, dass es sehr platzsparend in der Baueinheit angeordnet werden kann. Die axiale Elastizität ermöglicht zudem, dass eine durch Verschleiß bedingte axiale Bewegungswegveränderung der Kupplungsanordnung ausgleichbar ist, so dass die auf die Tilgermassen ausgeübte Kraft im Wesentlichen konstant bleibt, auch wenn sich der axiale Weg des die Einschränkungsvorrichtung betätigenden Kupplungselements ändert.

Zudem ist vorteilhaft, wenn das mindestens eine Wirkelement vorzugsweise entgegen der Kraftbeaufschlagungsrichtung, vorgespannt ausgebildet ist. Dadurch kann erreicht werden, dass das Wirkelement von der Tilgermasse automatisch abgerückt wird, wenn das Kupplungselement keine Kraft mehr auf das Wirkelement ausübt.

Gemäß einem weiteren vorteilhaften Ausführungsbeispiel ist das mindestens eine Wirkelement als angefedertes Anpresselement, insbesondere als angefederter Anpressbolzen ausgebildet. Derartige Anpressbolzen sind einfach zu montieren und weisen eine zuverlässige Kraftbeaufschlagung auf.

Alternativ oder zusätzlich kann das mindestens eine Wirkelement auch als Elastomer ausgebildet ist. Eine derartige Ausgestaltung hat den Vorteil, dass keine weiteren mechanischen Federelemente eingebracht werden müssten, die einer größeren Störanfälligkeit unterliegen. Zudem stellt ein Elastomer eine sehr kostengünstige Variante dar.

Ebenfalls vorteilhaft ist eine Ausgestaltung, bei der das Wirkelement als Federelement, insbesondere als Tangentialblattfeder, Tellerfeder, oder als Membranfeder, ausgebildet ist. Dies ist insbesondere dann vorteilhaft, wenn das Wirkelement mittels eines radial innerhalb des Schwingungstilgers angeordneten Kupplungselements betätigt wird. Gemäß einem weiteren vorteilhaften Ausführungsbeispiel ist das Wirkelement direkt an dem Kupplungselement angebunden. Dadurch kann direkt eine axiale Kraft auf die mindestens eine Tilgermasse ausgeübt werden.
Als betätigende Kupplungselemente kann vorteilhafterweise ein elastisches Rückstellelement der Kupplungsanordnung, insbesondere eine Membranfeder und/oder eine Kupplungsbetätigungseinheit, insbesondere ein Ausrücker verwendet werden. Da diese Elemente axial beweglich und in der Nähe der Schwingungstilgervorrichtung anordenbar sind, können diese leicht zum Betätigen der Einrückvorrichtung verwendet werden. Dadurch kann auf die Tilgermasse derart eingewirkt werden, dass sie von dem Wirkelement gegen den Tilgermassenträger gedrückt wird und dort zum Anliegen kommt. Gemäß einem weiteren vorteilhaften Ausführungsbeispiel weist die erfindungsgemäße Baueinheit weiterhin eine elektrische Maschine mit einem Stator und einem Rotor auf, wobei vorzugsweise radial innerhalb des Rotors die Kupplungsanordnung und/oder die Schwingungstilgervorrichtung und/oder die Einschränkungsvorrichtung angeordnet sind. Die radial innerhalb des Rotors angeordnete Anordnung von Kupplungsvorrichtung, Schwingungstilger und/oder Einschränkungsvorrichtung hat den Vorteil, dass nur sehr wenig axialer Bauraum von der Baueinheit beansprucht wird.

Dabei ist insbesondere vorteilhaft, wenn das Wirkelement gegenüber dem Rotor angefedert ausgebildet ist. Da der Rotor ein axial feststehendes, benachbart angeordnetes Element ist, kann durch die Anfederung am Rotor weiterhin axialer Bauraum gespart werden.

Gemäß einem weiteren vorteilhaften Ausführungsbeispiel weist der Rotor weiterhin einen sich nach radial innen erstreckenden Rotorfortsatz auf, der vorzugsweise auch als Abstützelement für mindestens ein Element der Kupplungsanordnung, insbesondere für ein elastisches Rückstellelement der Kupplungsanordnung dient. Zudem kann auch die Schwingungstilgervorrichtung insgesamt, insbesondere der Tilgermassenträger drehfest am Rotor und/oder am Rotorfortsatz angeordnet sein. Durch all diese Ausgestaltungen wird eine axial sehr schmalbauende Baueinheit bereitgestellt, die insbesondere bei Hybridantrieben einsetzbar ist.

Ein weiterer Aspekt vorliegender Erfindung betrifft eine Hybridantriebsstranganordnung mit einer Verbrennungsmaschine und einer parallel zu der Verbrennungsmaschine vorgesehenen elektrischen Maschine zur Übertragung eines Drehmoments von der Verbrennungsmaschine und/oder der elektrischen Maschine auf eine Abtriebseinheit, insbesondere ein Getriebe, wobei zwischen Verbrennungsmaschine und Abtriebseinheit eine Baueinheit nach einem der vorhergehenden Ansprüche angeordnet ist. Da wie oben bereits beschrieben, die Baueinheit wenig axialen Bauraum beansprucht, kann vorteilhafterweise der gesamte Bauraumbedarf für die Hybridantriebsstranganordnung verringert werden.

Weitere Vorteile und bevorzugte Ausführungsformen sind in den Ansprüchen, der Beschreibung und den Zeichnungen definiert.

Im Folgenden soll die Erfindung anhand von in den Zeichnungen dargestellten Ausführungsbeispielen näher beschrieben werden. Dabei sind die gezeigten Ausführungsbeispiele rein exemplarischer Natur und sollen nicht den Schutzbereich der Erfindung festlegen. Dieser wird allein durch die anhängigen abhängigen Ansprüche definiert.

Es zeigen:
Fig. 1 eine schematische Darstellung eines ersten bevorzugten Ausführungsbeispiels der erfindungsgemäßen Baueinheit;
Fig. 2 eine schematische Darstellung eines zweiten bevorzugten Ausführungsbeispiels der erfindungsgemäßen Baueinheit;
Fig. 3 eine schematische Darstellung eines dritten bevorzugten Ausführungsbeispiels der erfindungsgemäßen Baueinheit; und
Fig. 4 eine schematische Darstellung eines vierten bevorzugten Ausführungsbeispiels der erfindungsgemäßen Baueinheit.

Im Folgenden werden gleiche oder funktionell gleichwirkende Bauteile mit denselben Bezugszeichen gekennzeichnet.

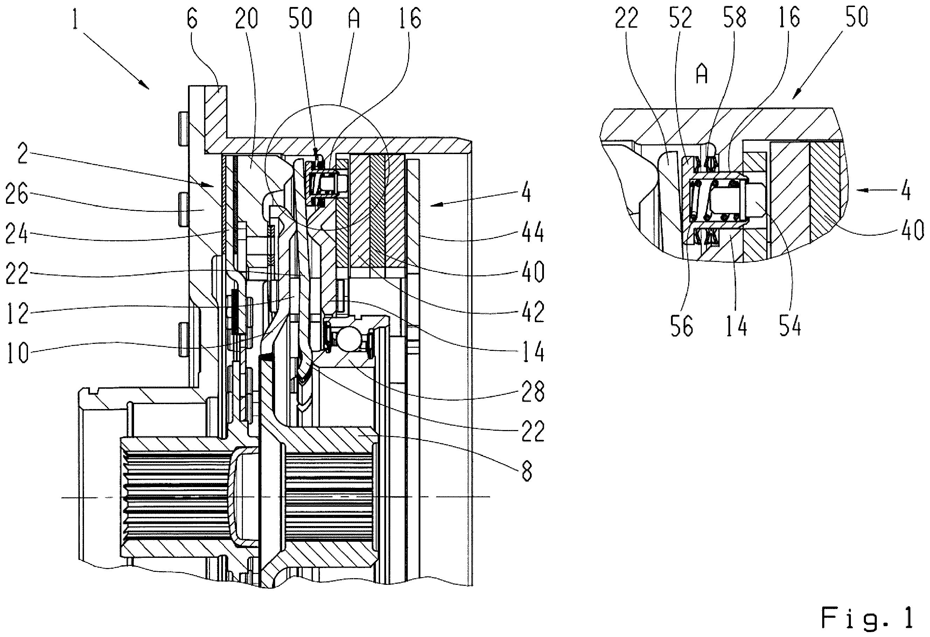

Die Fig. 1 bis 4 zeigen eine schematische Schnittansicht durch eine Baueinheit 1, bei der eine Kupplungsanordnung 2 und ein Schwingungstilger 4 radial innerhalb eines Rotorträgers 6 einer nicht weiter dargestellten elektrischen Maschine angeordnet sind.

Die Kupplungsanordnung 2 umfasst eine Anpressplatte 20, die mittels einer Membranfeder 22 mit Kraft beaufschlagbar ist und dazu ausgelegt ist, eine Kupplungsscheibe 24 in Reibschluss mit einer Gegenreibfläche 26 zu bringen. Zum Öffnen der Kupplungsvorrichtung 2 wird die Membranfeder 22 mittels eines Kupplungsbetätigungsmechanismus 28, insbesondere eines Ausrückers betätigt. Dadurch werden die Anpressplatte 20 und die Gegenreibfläche 26 aus ihrem Reibschluss mit der Kupplungsscheibe 24 gebracht.

Da die Kupplungsscheibe 24 mit einer Abtriebswelle eines Verbrennungsmotors (nicht dargestellt) drehfest verbunden ist, bedeutet dies auch, dass bei geöffneter Kupplungsvorrichtung 2 ein Drehmoment nur noch von der elektrischen Maschine auf eine Getriebeeingangswelle 8 übertragen wird. Die Getriebeeingangswelle 8 steht über Wiederlager 10 und Befestigungseinrichtung 12 mit einem am Rotorträger 6 ausgebildeten Rotorfortsatz 14 in drehfester Verbindung.

Des Weiteren zeigen die Fig. 1 bis 4 eine radial innerhalb des Rotors 6 angeordnete Schwingungstilgervorrichtung 4, die als Fliehkrafttilger ausgebildet ist. Dabei besteht der in den Figuren gestellte Fliehkrafttilger 4 aus einer Tilgermasse 40, die von zwei Tilgermassenträgern 42, 44 umgeben ist. Dabei können die Tilgermassenträger vorzugsweise drehfest am Rotorträger 6 und/oder am Rotorfortsatz 14 angeordnet sein.

Des Weiteren weisen die Fig. 1 bis 4 eine Einschränkungsvorrichtung 50 auf, die dazu ausgelegt ist, eine Bewegung der mindestens einen Tilgermasse 40 einzuschränken. Erfindungsgemäß wird dabei die Einschränkungsvorrichtung 50 mittels eines Elements der Kupplungsanordnung 2 betätigt.

Bei den in den Fig. 1 bis 3 dargestellten Ausführungsbeispielen ist das die Einschränkungsvorrichtung 50 betätigende Kupplungselement die Membranfeder 22, die an ihrem radial äußeren Bereich die Einschränkungsvorrichtung 50 kontaktiert. Beim Öffnen der Kupplungsvorrichtung 2 bewegt sich der Ausrücker 28 axial in Richtung Kupplungsscheibe 24 und drückt die Membranfederzungen 23 der Membranfeder 22 ebenfalls in Richtung Kupplungsscheibe 24. Dadurch bewegt sich der radial äußere Bereich der Membranfeder 22 in Richtung Tilger 4 und kann auf die Einschränkungsvorrichtung 50 einwirken.

In der vergrößerten Darstellungen A der Fig. 1 bis 4 sind detailliert die jeweiligen Einschränkungsvorrichtung 50 dargestellt.

In dem in Fig. 1 und in dem Teilabschnitt A der Fig. 1 dargestellten Ausführungsbeispiel weist die Einschränkungsvorrichtung 50 als Wirkelement einen Anpressbolzen 52 auf. Dieser Anpressbolzen 52 erstreckt sich durch eine Öffnung 16 im Rotorfortsatz 14 in Richtung Schwingungstilger 4. Dabei besteht der Anpressbolzen 52 aus einem angefederten Element 54, das eine axiale Kraft auf die Tilgermasse 40 ausübt und diese zum Zwecke der Festklemmung gegen den Tilgermassenträger 44 drückt. Dabei ist das angefederte Element 54 innerhalb des Anpressbolzens 52 mittels einer Feder 56 federnd gelagert. Diese Feder 56 stellt somit eine axial elastische Komponente dar, die bewirkt, dass die Kraft auf die Tilgermasse 40 im Wesentlichen konstant bleibt, auch wenn sich der Membranfederweg aufgrund von Verschleiß leicht ändert.

Wie ebenfalls der Fig. 1 in der vergrößerten Darstellung A zu entnehmen ist, weist der Anpressbolzen 52 weiterhin ein Federelement 58 auf, das dazu ausgelegt ist, den Anpressbolzen 52 federnd am Rotorfortsatz 14 abzustützen. Diese federnde Abstützung bewirkt, dass der Anpressbolzen 52 in seine Ruhestellung zurückkehrt, wenn die Kupplungsvorrichtung nicht mehr betätigt wird. Dabei ist die Ruhestellung derart, dass der Anpressbolzen 52 die Beweglichkeit der Tilgermassen nicht einschränkt.

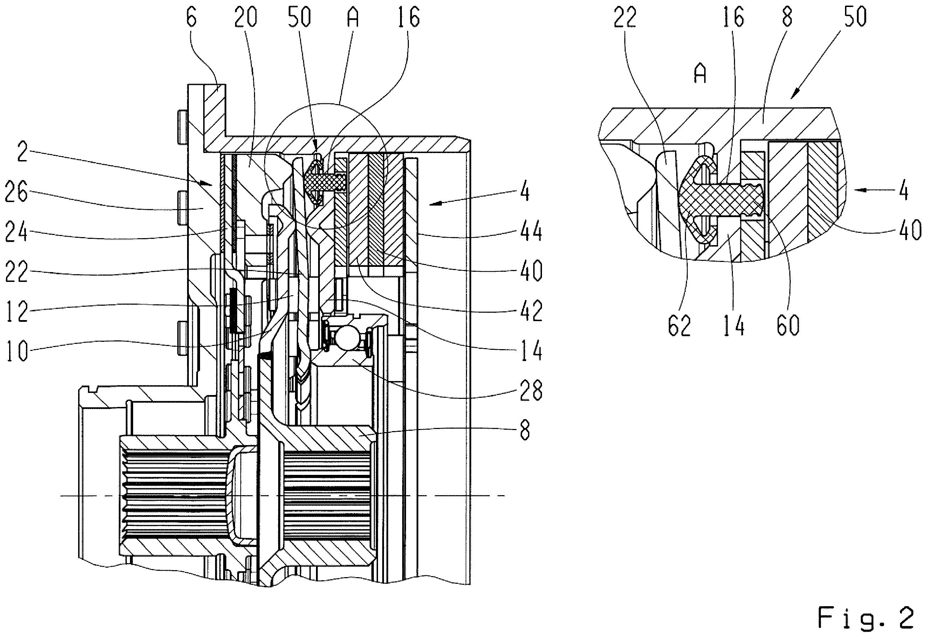

Fig. 2 zeigt ein weiteres bevorzugtes Ausführungsbeispiel, wobei die Einschränkungsvorrichtung 50 ein aus einem Elastomer gebildetes Wirkelement 60 aufweist. Analog zu dem in Fig. 1 dargestellten Ausführungsbeispiel ragt auch das Wirkelement 60 durch Öffnungen 16 im Rotorfortsatz 14 und ist axial mittels der Membranfeder 22 betätigbar. Da das Wirkelement 60 bereits als Elastomer ausgebildet ist, ist dadurch schon eine axiale elastische Ausbildung vorgegeben. Weiterhin zeigt das Wirkelement 60 an seinem der Membranfeder 22 zugeordneten Bereich elastisch ausgebildete Anformungen 62, die sich am Rotorfortsatz 14 abstützen und für eine Rückkehr des Wirkelements 60 in seine Ruheposition, d.h. die Position ohne Kraftbeaufschlagung auf die Tilgermasse 40, sorgen. Dies ist wiederum in der vergrößerten Darstellung A der Fig. 2 besonders gut zu sehen.

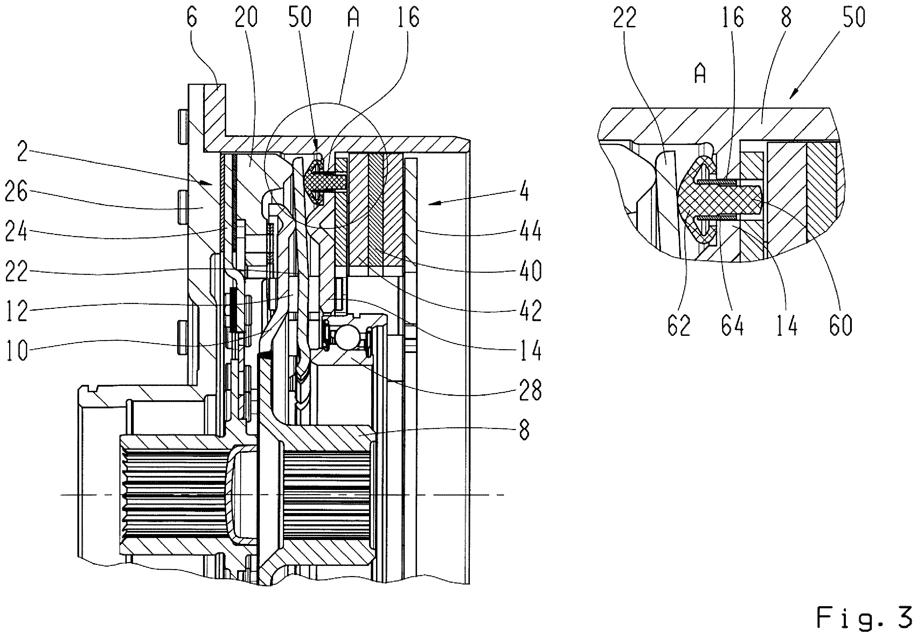

Zusätzlich zu dem federnd ausgebildeten Abschnitt 62 kann das als Elastomer ausgebildete Wirkelement 60, wie Fig. 3 zu entnehmen ist, weiterhin eine axiale Führung 64 aufweisen, die dafür sorgt, dass sich das Wirkelement 60 bei Betätigung nicht so sehr radial ausdehnen kann, dass es in der Öffnung 16 am Rotorfortsatz 14 festklemmt.

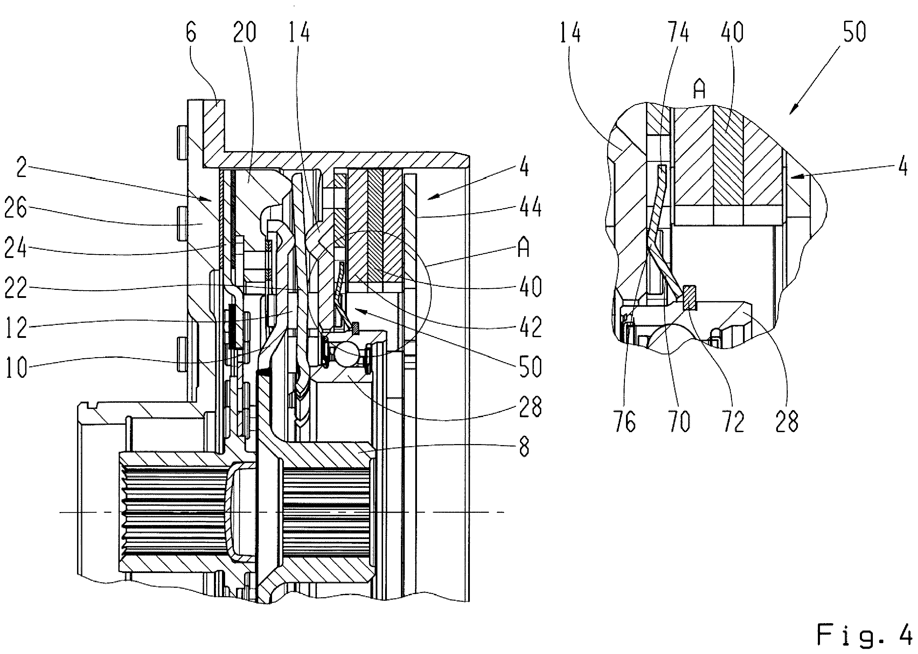

Alternativ zu den von der Membranfeder 22 betätigten Wirkelementen der Einschränkungsvorrichtung 50, kann auch ein anderes Element der Kupplungseinrichtung 2 zum Betätigen der Einschränkungsvorrichtung 50 verwendet werden. So zeigt beispielsweise das Ausführungsbeispiel der Fig. 4 eine Einschränkungsvorrichtung 50, die über den Ausrücker 28 betätigbar ist. Dazu weist die Einschränkungsvorrichtung 50, wie der vergrößerten Ansicht A der Fig. 4 zu entnehmen ist, ein federndes Element, insbesondere eine Tellerfeder 70 auf, die sich an einem Abstützelement 72, das axial nicht verschiebbar am Ausrücker 28 angeordnet ist, abstützt. Bei axialer Bewegung des Ausrückers 28 drückt das Abstützelement 72 auf den radial inneren Rand des Federelements 70, insbesondere der Tellerfeder, so dass aufgrund der Ausgestaltung der Tellerfeder 70 sich der radial äußere Rand 74 der Tellerfeder 70 axial in Richtung Schwingungstilger 4 bewegt. Dazu ist die Tellerfeder 70 weiterhin an dem Rotorfortsatz 14 in einem Bereich 76 abgestützt.

Wird die Kupplung mittels des Ausrückers 28 betätigt, drückt auch der radial äußere Rand 74 der Tellerfeder 70 gegen die Tilgermasse 40 und diese damit gegen den Tilgermassenträger 44, so dass auch in diesem Fall die Tilgermasse 40 in ihrer Beweglichkeit eingeschränkt ist.

Alternativ könnte auch am Ausrücker 28 ein axial elastisches Element vorgesehen sein, dass eine axial in Richtung Motor ausgerichtete Kraft auf die Tilgermasse 40 ausübt und diese damit am motorseitigen Tilgermassenträger 42 oder direkt am Rotorfortsatz 14 festklemmt.

Neben den dargestellten Ausführungsbeispielen ist eine Vielzahl von Methoden zum Festklemmen der Tilgermassen denkbar. So können beispielsweise auch zwischen Membranfeder 22 und Schwingungstilger 4 Membranfedern, Tangentialblattfedern oder Tellerfedern zum Einsatz kommen. Ebenfalls ist die Erfindung nicht auf die dargestellten Anordnung der Elemente eingeschränkt, insbesondere kann die axiale Anordnung zwischen Kupplungsanordnung, Schwingungstilgervorrichtung und Rotor sich von dem dargestellten Ausführungsbeispiel unterscheiden. Weiterhin kann auch auf einen Rotorfortsatz 14, der als Abstützung für die Membranfeder 22, verzichtet werden und beispielsweise ein radialer Abschnitt des Rotorträgers verwendet werden.

Insgesamt wird durch das aktive Einwirken auf die Tilgermassen erreicht, dass auch bei einem Hybridantrieb mit zu erwartenden niedrigen Drehzahlen eine zuverlässige Blockierung der Tilgermassen bewirkt wird, so dass störende Geräusche vermieden werden. Neben den dargestellten Ausführungen ist es selbstverständlich auch möglich, die Kupplungsanordnung-Schwingungstilger-Kombination unabhängig von einem Rotor darzustellen.

### Bezugszeichen

- 1: Baueinheit
- 2: Kupplungsanordnung
- 4: Schwingungstilger
- 6: Rotorträger
- 8: Getriebeeingangswelle
- 10: Wiederlager
- 12: Bolzen
- 14: Rotorträgerfortsatz
- 16: Öffnung im Rotorfortsatz
- 20: Anpressplatte
- 22: Membranfeder
- 24: Kupplungsscheibe
- 26: Gegenreibfläche
- 28: Ausrücker
- 40: Tilgermasse
- 42, 44: Tilgermassenträger
- 50: Einschränkungsvorrichtung
- 52: Anpressbolzen
- 54: Kraftelement
- 56: Feder
- 58: Feder
- 60: Wirkelement aus Elastomer
- 62: federnder Bereich
- 64: Führung
- 70: Tellerfeder
- 72: Befestigungselement
- 74: radial äußerer Rand der Tellerfeder
- 76: Abstützung der Tellerfeder

## Patentansprüche

1. Baueinheit (1) für einen Antriebsstrang eines Kraftfahrzeugs mit zumindest:
einer Kupplungsanordnung (2), die dazu ausgelegt ist, eine Verbrennungsmaschine vom Antriebsstrang zu entkoppeln, und
einer drehzahladaptiven Schwingungstilgervorrichtung (4), insbesondere einem Fliehkrafttilger, zur Reduzierung von Schwingungen im Antriebsstrang mit mindestens einer entlang einer Auslenkbahn auslenkbaren Tilgermasse (40),
wobei weiterhin eine Einschränkungsvorrichtung (50) vorgesehen ist, die dazu ausgelegt ist, eine derartige Kraft auf die mindestens eine Tilgermasse (40) auszuüben, dass die Tilgermasse (40) in ihrer Bewegung zumindest eingeschränkt ist,
**dadurch gekennzeichnet, dass** die Schwingungstilgervorrichtung (4) weiterhin mindestens einen Tilgermassenträger (42; 44) aufweist, der dazu ausgelegt ist, die mindestens eine Tilgermasse (40) zu tragen, so dass die Tilgermasse (40) pendelnd gelagert ist und dass die Einschränkungsvorrichtung (50) weiterhin dazu ausgelegt ist, zum Einschränken der Bewegung der mindestens einen Tilgermasse (40) von mindestens einem Element der Kupplungsanordnung (2) betätigbar zu sein.

2. Baueinheit (1) nach Anspruch 1, wobei die Einschränkungsvorrichtung (50) weiterhin dazu ausgelegt ist, die Tilgermasse (40) mit einer im Wesentlichen axialen Kraft zu beaufschlagen.

3. Baueinheit (1) nach Anspruch 1 oder 2, wobei die Einschränkungsvorrichtung (50) mindestens ein Wirkelement (52; 60) aufweist, das dazu ausgelegt ist, einschränkend auf die Tilgermasse (40) einzuwirken, wobei vorzugsweise das mindestens eine Wirkelement (52; 60) axial elastisch ausgebildet ist.

4. Baueinheit (1) nach Anspruch 3, wobei das mindestens eine Wirkelement (52; 60) weiterhin, vorzugsweise entgegen der Kraftbeaufschlagungsrichtung, vorgespannt ausgebildet ist.

5. Baueinheit (1) nach Anspruch 3 oder 4, wobei das mindestens eine Wirkelement (52) als angefedertes Anpresselement, insbesondere als angefederter Anpressbolzen, ausgebildet ist.

6. Baueinheit (1) nach einem der vorhergehenden Ansprüche 3 bis 5, wobei das mindestens eine Wirkelement (60) als Elastomer ausgebildet ist.

7. Baueinheit (1) nach einem der vorhergehenden Ansprüche 3 bis 6, wobei das mindestens eine Wirkelement (52; 60) als Federelement, insbesondere als Tangentialblattfeder, Tellerfeder, oder als Membranfeder, ausgebildet ist.

8. Baueinheit (1) nach einem der vorhergehenden Ansprüche, wobei die Einschränkungsvorrichtung (50), insbesondere das mindestens eine Wirkelement (52; 60), direkt an dem Kupplungselement angebunden ist.

9. Baueinheit (1) nach einem der vorhergehenden Ansprüche, wobei das die Einschränkungsvorrichtung (50) betätigende Kupplungselement ein elastisches Rückstellelement der Kupplungsanordnung (2), insbesondere eine Membranfeder (22), ist.

10. Baueinheit (1) nach einem der vorhergehenden Ansprüche, wobei das die Einschränkungsvorrichtung (50) betätigende Kupplungselement eine Kupplungsbetätigungseinheit, insbesondere ein Ausrücker (28), ist.

11. Baueinheit (1) nach einem der vorhergehenden Ansprüche, wobei die Baueinheit (1) weiterhin eine elektrische Maschine mit einem Stator und einem Rotor aufweist, wobei vorzugsweise radial innerhalb des Rotors die Kupplungsanordnung (2) und/der die Schwingungstilgervorrichtung (4) und/oder die Einschränkungsvorrichtung (50) angeordnet sind.

12. Baueinheit (1) nach einem der Ansprüche 3 bis 11, wobei das Wirkelement (52; 60) gegenüber dem Rotor angefedert ausgebildet ist.

13. Baueinheit (1) nach Anspruch 11 oder 12, wobei der Rotor weiterhin einen sich nach radial innen erstreckenden Rotorfortsatz (14) aufweist, der vorzugsweise als Abstützelement für mindestens ein Element der Kupplungsanordnung (2), insbesondere für ein elastisches Rückstellelement der Kupplungsanordnung (2), und/oder als Abstützelement für eine Anfederung des Wirkelements (52; 60) der Einschränkungsvorrichtung (50), dient.

14. Baueinheit (1) nach einem der vorhergehenden Ansprüche 12 bis 13, wobei die Schwingungstilgervorrichtung (4), insbesondere der Tilgermassenträger (42; 44), drehfest am Rotor und/oder am Rotorfortsatz (14) angeordnet ist.

15. Hybridantriebsstrang mit einer Verbrennungsmaschine und einer parallel zu Verbrennungsmaschine vorgesehenen elektrischen Maschine zur Übertragung eines Drehmoments von der Verbrennungsmaschine und/oder elektrischen Maschine auf eine Abtriebseinheit, insbesondere ein Getriebe, **dadurch gekennzeichnet, dass** zwischen Verbrennungsmaschine und Abtriebseinheit eine Baueinheit (1) nach einem der vorhergehenden Ansprüche angeordnet ist.

## Claims

1. Structural unit (1) for a drive train of a motor vehicle having at least:
a clutch arrangement (2) which is designed to decouple an internal combustion engine from the drive train, and an adaptive-speed vibration absorber apparatus (4), in particular a centrifugal force absorber, for reducing vibrations in the drive train with at least one absorber mass (40) which can be deflected along the deflecting track,
a limiting apparatus (50) being provided, furthermore, which is designed to exert a force on the at least one absorber mass (40), which force is such that the movement of the absorber mass (40) is at least limited, **characterized in that**, furthermore, the vibration absorber apparatus (4) has at least one absorber mass carrier (42; 44) which is designed to carry the at least one absorber mass (40), with the result that the absorber mass (40) is mounted in a swinging manner, and **in that**, furthermore, the limiting apparatus (50) is designed to be actuable for limiting the movement of the at least one absorber mass (40) by at least one element of the clutch arrangement (2).

2. Structural unit (1) according to Claim 1, the limiting apparatus (50) being designed, furthermore, to load the absorber mass (40) with a substantially axial force.

3. Structural unit (1) according to Claim 1 or 2, the limiting apparatus (50) having at least one active element (52; 60) which is designed to have a limiting effect on the absorber mass (40), the at least one active element (52; 60) preferably being of axially elastic configuration.

4. Structural unit (1) according to Claim 3, the at least one active element (52; 60) being configured, furthermore, so as to be prestressed, preferably counter to the force loading direction.

5. Structural unit (1) according to Claim 3 or 4, the at least one active element (52) being configured as a sprung pressing element, in particular as a sprung pressing pin.

6. Structural unit (1) according to one of the preceding Claims 3 to 5, the at least one active element (60) being configured as an elastomer.

7. Structural unit (1) according to one of the preceding Claims 3 to 6, the at least one active element (52; 60) being configured as a spring element, in particular as a tangential leaf spring, a cup spring, or as a diaphragm spring.

8. Structural unit (1) according to one of the preceding claims, the limiting apparatus (50), in particular the at least one active element (52; 60), being attached directly on the clutch element.

9. Structural unit (1) according to one of the preceding claims, the clutch element which actuates the limiting apparatus (50) being an elastic restoring element of the clutch arrangement (2), in particular a diaphragm spring (22).

10. Structural unit (1) according to one of the preceding claims, the clutch element which actuates the limiting apparatus (50) being a clutch actuating unit, in particular a clutch operator (28).

11. Structural unit (1) according to one of the preceding claims, the structural unit (1) having, furthermore, an electric machine with a stator and a rotor, the clutch arrangement (2) and/or the vibration absorber apparatus (4) and/or the limiting apparatus (50) preferably being arranged radially within the rotor.

12. Structural unit (1) according to one of Claims 3 to 11, the active element (52; 60) being of sprung configuration with respect to the rotor.

13. Structural unit (1) according to Claim 11 or 12, the rotor having, furthermore, a rotor projection (14) which extends radially to the inside and preferably serves as a supporting element for at least one element of the clutch arrangement (2), in particular for an elastic restoring element of the clutch arrangement (2), and/or as a supporting element for a spring means of the active element (52; 60) of the limiting apparatus (50).

14. Structural unit (1) according to either of the preceding Claims 12 and 13, the vibration absorber apparatus (4), in particular the absorber mass carrier (42; 44), being arranged fixedly on the rotor and/or on the rotor projection (14) so as to rotate with them/it.

15. Hybrid drive train having an internal combustion engine and an electric machine which is provided parallel to the internal combustion engine for transmitting a torque from the internal combustion engine and/or electric machine to an output unit, in particular a transmission, **characterized in that** a structural unit (1) according to one of the preceding claims is arranged between the internal combustion engine and the output unit.

## Revendications

1. Unité modulaire (1) pour une chaîne cinématique d'un véhicule automobile comprenant au moins :
un ensemble d'embrayage (2), qui est conçu pour découpler un moteur à combustion interne de la chaîne cinématique, et
un dispositif d'amortissement des vibrations (4) s'adaptant au nombre de tours, en particulier un amortisseur à force centrifuge, pour la réduction de vibrations dans la chaîne cinématique avec au moins une masse d'amortissement (40) pouvant être déviée le long d'une piste de déviation,
dans laquelle il est en outre prévu un dispositif de limitation (50), qui est conçu pour exercer sur l'au moins une masse d'amortissement (40) une force telle que la masse d'amortissement (40) soit au moins limitée dans son mouvement,
**caractérisée en ce que** le dispositif d'amortissement des vibrations (4) présente en outre au moins un support de masse d'amortissement (42; 44), qui est conçu de façon à porter au moins une masse d'amortissement (40), de telle manière que la masse d'amortissement (40) soit montée de façon pendulaire et **en ce que** le dispositif de limitation (50) est en outre conçu de façon à être actionnable pour limiter le mouvement de l'au moins une masse d'amortissement (40) d'au moins un élément de l'ensemble d'embrayage (2).

2. Unité modulaire (1) selon la revendication 1, dans laquelle le dispositif de limitation (50) est en outre conçu de façon à soumettre la masse d'amortissement (40) à une force essentiellement axiale.

3. Unité modulaire (1) selon la revendication 1 ou 2, dans laquelle le dispositif de limitation (50) présente au moins un élément actif (52; 60), qui est conçu de façon à avoir une action de limitation sur la masse d'amortissement (40), dans laquelle l'au moins un élément actif (52; 60) est de préférence axialement élastique.

4. Unité modulaire (1) selon la revendication 3, dans laquelle l'au moins un élément actif (52; 60) est en outre réalisé sous forme précontrainte, de préférence contre la direction d'action de la force.

5. Unité modulaire (1) selon la revendication 3 ou 4, dans laquelle l'au moins un élément actif (52) est réalisé sous forme d'élément de pression à ressort, en particulier d'axe de pression à ressort.

6. Unité modulaire (1) selon l'une quelconque des revendications précédentes 3 à 5, dans laquelle l'au moins un élément actif (60) est réalisé sous forme d'élastomère.

7. Unité modulaire (1) selon l'une quelconque des revendications précédentes 3 à 6, dans laquelle l'au moins un élément actif (52; 60) est réalisé sous la forme d'un élément de ressort, en particulier de ressort à lame tangentiel, de rondelle élastique ou de ressort à membrane.

8. Unité modulaire (1) selon l'une quelconque des revendications précédentes, dans laquelle le dispositif de limitation (50), en particulier l'au moins un élément actif (52; 60), est relié directement à l'élément d'embrayage.

9. Unité modulaire (1) selon l'une quelconque des revendications précédentes, dans laquelle l'élément d'embrayage actionnant le dispositif de limitation (50) est un élément de rappel élastique de l'ensemble d'embrayage (2), en particulier un ressort à membrane (22).

10. Unité modulaire (1) selon l'une quelconque des revendications précédentes, dans laquelle l'élément d'embrayage actionnant le dispositif de limitation (50) est une unité d'actionnement de l'embrayage, en particulier un dispositif de débrayage (28).

11. Unité modulaire (1) selon l'une quelconque des revendications précédentes, l'unité modulaire (1) présentant en outre une machine électrique avec un stator et un rotor, l'ensemble d'embrayage (2) et/ou le dispositif d'amortissement des vibrations (4) et/ou le dispositif de limitation (50) étant disposés de préférence radialement à l'intérieur du rotor.

12. Unité modulaire (1) selon l'une quelconque des revendications 3 à 11, dans laquelle l'élément actif (52; 60) est suspendu par rapport au rotor.

13. Unité modulaire (1) selon la revendication 11 ou 12, dans laquelle le rotor présente en outre un prolongement de rotor (14) s'étendant radialement vers l'intérieur, qui sert de préférence d'élément d'appui pour au moins un élément de l'ensemble d'embrayage (2), en particulier pour un élément de rappel élastique de l'ensemble d'embrayage (2), et/ou d'élément d'appui pour une suspension de l'élément actif (52; 60) du dispositif de limitation (50).

14. Unité modulaire (1) selon l'une quelconque des revendications précédentes 12 à 13, dans laquelle le dispositif d'amortissement des vibrations (4), en particulier le support de masse d'amortissement (42; 44), est disposé de façon solidaire en rotation sur le rotor et/ou sur le prolongement de rotor (14).

15. Chaîne cinématique hybride avec un moteur à combustion interne et une machine électrique prévue parallèlement au moteur à combustion interne pour la transmission d'un couple moteur du moteur à combustion interne et/ou de la machine électrique à une unité de sortie, en particulier une boîte de vitesses, **caractérisée en ce qu'**une unité modulaire (1) selon l'une quelconque des revendications précédentes est disposée entre le moteur à combustion interne et l'unité de sortie.
